# EUROPEAN PATENT APPLICATION

(11) **EP 4 697 013 A1**
(43) Date of publication of application: **18.02.2026**
(21) Application number: 24778146.1
(22) Date of filing: 28.03.2024
(51) Int. Cl.: G01N 21/64, G01N 21/00

(54) **METHOD AND DEVICE FOR SIGNAL COLLECTION**

(30) Priority: 28.03.2023 CN 202310309604
(71) Applicant: Thermo Fisher Scientific (Shanghai) Instruments Co., Ltd., Shanghai 201206 (CN)
(72) Inventor: WU, Shenghai, Shanghai 201206 (CN); LI, Yong, Shanghai 201206 (CN); YANG, Fei, Shanghai 201206 (CN); QIN, Laigui, Shanghai 201206 (CN)
(74) Representative: Boult Wade Tennant LLP
(86) International application number: PCT/CN2024/084426
(87) International publication number: WO 2024/199360

(57) **Abstract**

A method for performing signal collection on fluorescence emitted by an object to be subjected to detection in a sample, and a device for signal collection. The method for performing signal collection on fluorescence emitted by an object to be subjected to detection in a sample comprises the following steps: performing photoelectric detection on fluorescence (205) which is emitted by an object (203) to be subjected to detection in a sample (202), so as to generate an electrical signal; integrating the electrical signal; collecting the integrated electrical signal; and in response to a trigger indication (512), releasing, within a time period, more than 90% of charges which are accumulated in a charge integrator (210) used for integrating the electrical signal, wherein the time period is less than 15% of a half-peak full width of a time-domain waveform (B) that reflects the light intensity of the fluorescence. By means of releasing most of the accumulated charges in a timely manner within a short time during the process of integrating an electrical signal which is generated during fluorescence detection, the problem of the dynamic range of a fluorescence detector being insufficient is effectively solved, such that the dynamic range of the fluorescence detector can be expanded.

## Description

### Technical Field

The present disclosure relates generally to signal acquisition, and particularly to acquisition of a fluorescence signal generated in biological sample analysis.

### Background Art

A fluorescence detector (e.g., an array of silicon photomultipliers (SiPMs)) is often used in biological sample analysis to detect fluorescence emitted by an object to be detected in a sample. The fluorescence detector performs photoelectric detection on the fluorescence to generate an electrical signal. In order to acquire the electrical signal for further analysis, integration of the electrical signal and corresponding analog-to-digital conversion need to be performed to acquire an integrated electrical signal.

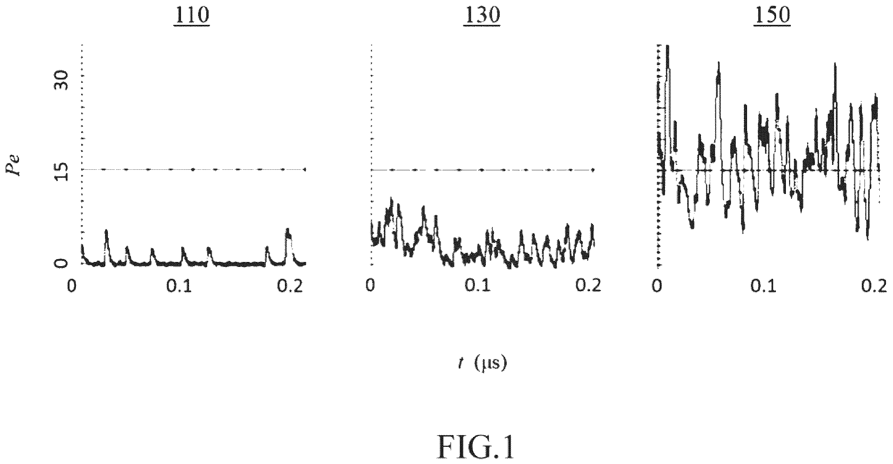

The acquisition of the electrical signal is performed in different modes depending on an intensity of the electrical signal. FIG. 1 shows waveforms of photo-electron charge signal outputs in time domain that are detected by the fluorescence detector at different fluorescence intensities, where a waveform 110 may correspond to a low fluorescence intensity level, a waveform 130 may correspond to a medium fluorescence intensity level, and a waveform 150 may correspond to a high fluorescence intensity level. In the prior art, a photo-electron charge signal output at a low fluorescence intensity level is acquired using a photon counting mode, and a photo-electron charge signal output at a high fluorescence intensity level is acquired using an analog mode (i.e., continuous integration). For the case in which the silicon photomultiplier (also referred to as a multi-pixel photon counter (MPPC)) is used as a fluorescence detector, a dynamic range of the detector is limited by the number of avalanche diode detectors in the MPPC and a quenching time for responding to a single photon. For example, for fluorescence detection at the microsecond order of magnitude, the fluorescence detector can provide a dynamic range of about 10⁶. However, saturation in the subsequent integration of the electrical signal and in the analog-to-digital conversion during acquisition further limits the dynamic range. Accordingly, a conventional fluorescence signal acquisition method typically provides a dynamic range of about 10⁴. Therefore, the photon counting mode is inoperative to a signal output at an intensity level corresponding to the waveform 150 shown in FIG. 1, and the analog mode is inoperative to a signal output at an intensity level corresponding to the waveform 110 shown in FIG. 1. For a fluorescence detection speed at the microsecond order of magnitude, the dynamic range of 10⁴ limits application of the detection in biological sample analysis. Therefore, the dynamic range of the fluorescence detector needs to be increased to adapt to the fluorescence detection speed at the microsecond order of magnitude.

Some methods for improving the dynamic range of fluorescence detection are proposed in the art. U.S. patent application US 2019/0113435 A1 discloses a multi-photon counting method for a high sensitivity flow cytometer system. The method involves integrating photo-electrons over time intervals, with each time interval being separated by a reset period, to control the start and stop of integration, where during the reset period, no photo-electrons are counted (i.e., no integration of photo-electron charges from a detector). However, performing no integration during the reset period may avoid saturation of integral signals only by natural quenching of photo-electrons, resulting in a limited increase in the dynamic range of the detector. Moreover, the method requires real-time monitoring of a light intensity of detected light to control the start and stop of integration, making the control complex and occupying a large number of processing resources.

There is a need in the art for an efficient and simple method for increasing the dynamic range of the fluorescence detector.

### Summary of the Invention

The present disclosure is provided to provide a method and device capable of increasing a dynamic range of a fluorescence detector.

According to an aspect of the present disclosure, a signal acquisition (collection) method for fluorescence emitted by an object to be detected in a sample is provided. The method includes: performing photoelectric detection on the fluorescence emitted by the object to be detected in the sample, to generate an electrical signal; integrating the electrical signal; acquiring (collecting) an integrated electrical signal; and in response to a trigger instruction, releasing, in a time period, more than 90% of charges accumulated in a charge integrator configured to integrate the electrical signal, where the time period is less than 15% of a full width at half maximum of a time domain waveform reflecting a light intensity of the fluorescence. A dynamic range that a fluorescence detector can provide (i.e., a temporal resolution of the fluorescence detector) may be fully utilized by releasing the majority of the accumulated charges in a short time period, thereby increasing the dynamic range of the fluorescence detector. For example, for a fluorescence detection speed at the microsecond order of magnitude, the dynamic range of the fluorescence detector may be effectively increased by 2 to 3 orders of magnitude, e.g., reaching a dynamic range of 10⁶.

In the method described above, the trigger instruction is generated in response to one of the following: a light intensity of scattered light generated by irradiating the object to be detected being less than a first threshold intensity; a duration in which an intensity of the integrated electrical signal is kept from being increased reaching a threshold time period; a duration of integrating the electrical signal reaching a preset time period; and the intensity of the integrated electrical signal being greater than a threshold proportion to a full scale of an analog-to-digital converter used in acquisition of the electrical signal. The trigger instruction is generated when a determination criterion or timing indicating that the light intensity of the scattered light and/or fluorescence is less than a predetermined threshold intensity or remains stable is satisfied, to release the charges accumulated during integration, making it possible to ensure that the accumulated charges are released in time while data of a current signal waveform is fully acquired, thereby reserving a sufficient margin for acquisition of a next signal.

In the method described in any of the above, the trigger instruction is a first trigger instruction, and integrating the electrical signal includes: starting integration of the electrical signal in response to a second trigger instruction. The risk of saturation of the charge integrator and the analog-to-digital converter in a data acquisition module is further reduced by making a start of an integration process of the charge integrator also controlled.

In the method described in any of the above, the second trigger instruction is generated in response to one of the following: a light intensity of scattered light generated by irradiating the object to be detected being greater than a second threshold intensity; an intensity of the integrated electrical signal being greater than a third threshold intensity; an intensity of light used to irradiate the object to be detected being greater than a fourth threshold intensity; and a preset delay time elapsing after the object to be detected is irradiated. The trigger instruction is generated when a determination criterion or timing indicating that the intensity of the scattered light and/or fluorescence and/or light emitted by a light source is greater than a predetermined threshold intensity is satisfied, to cause the charge integrator to start the integration, making it possible to record data of a current incoming signal waveform in time, thereby recording the entire current signal waveform.

In the method described in any of the above, integrating the electrical signal includes: stopping integration of the electrical signal in response to the trigger instruction. The risk of saturation of the charge integrator and the analog-to-digital converter in the data acquisition module is further reduced by first stopping the integration in response to the trigger instruction and then releasing the accumulated charges.

In the method described in any of the above, acquiring the integrated electrical signal includes: continuously recording the integrated electrical signal at a time interval less than 30% of the full width at half maximum of the waveform. The time interval for continuous recording of the integrated electrical signal is set, so that it may be ensured that sufficient data points of the integrated electrical signal are recorded, thereby facilitating analysis based on a relatively complete signal waveform obtained.

The method described in any of the above further includes: dividing data acquired in integration windows separated by the trigger instruction into data sets for further analysis. The data acquired in the respective integration windows is divided, so that data of each incoming waveform may be analyzed and processed separately.

The method described in any of the above further includes: adjusting a gain value of the charge integrator based on comparison of an intensity of the integrated electrical signal with a preset value, where the preset value is determined based on a predetermined proportion to a full scale of an analog-to-digital converter used in acquisition of the electrical signal. A dynamic gain for an integration operation of the charge integrator is used, so that saturation of the analog-to-digital converter in a data acquisition module may be avoided, further increasing the dynamic range of the fluorescence detector.

According to another aspect of the present disclosure, a signal acquisition device (a device for signal collection) is provided. The device includes: a trigger generator configured to generate and provide a trigger instruction; a charge integrator configured to: integrate an electrical signal, where the electrical signal is generated by performing photoelectric detection on fluorescence emitted by an object to be detected in a sample; and in response to reception of the trigger instruction, release, in a time period, more than 90% of charges accumulated during integration, where the time period is less than 15% of a full width at half maximum of a time domain waveform reflecting a light intensity of the fluorescence; and a data acquisition module configured to acquire an integrated electrical signal. A dynamic range that a fluorescence detector can provide (i.e., a temporal resolution of the fluorescence detector) may be fully utilized by releasing the majority of the accumulated charges in a short time period, thereby increasing the dynamic range of the fluorescence detector. For example, for a fluorescence detection speed at the microsecond order of magnitude, the dynamic range of the fluorescence detector may be effectively increased by 2 to 3 orders of magnitude, e.g., reaching a dynamic range of 10⁶.

In the device described above, the trigger generator is configured to generate the trigger instruction in response to one of the following: a light intensity of scattered light generated by irradiating the object to be detected being less than a first threshold intensity; a duration in which an intensity of the integrated electrical signal is kept from being increased reaching a threshold time period; a duration of integrating the electrical signal reaching a preset time period; and the intensity of the integrated electrical signal being greater than a threshold proportion to a full scale of an analog-to-digital converter in the data acquisition module. The trigger instruction is generated when a determination criterion or timing indicating that the light intensity of the scattered light and/or fluorescence is less than a predetermined threshold intensity or remains stable is satisfied, to release the charges accumulated during integration, making it possible to ensure that the accumulated charges are released in time while data of a current signal waveform is fully acquired, thereby reserving a sufficient margin for acquisition of a next signal.

In the device described in any of the above, the trigger instruction is a first trigger instruction, and the charge integrator is further configured to: start integration of the electrical signal in response to a second trigger instruction. The risk of saturation of the charge integrator and the analog-to-digital converter in the data acquisition module is further reduced by making a start of an integration process of the charge integrator also controlled.

In the device described in any of the above, the trigger generator is configured to generate the second trigger instruction in response to one of the following: a light intensity of scattered light generated by irradiating the object to be detected being greater than a second threshold intensity; an intensity of the integrated electrical signal being greater than a third threshold intensity; an intensity of light used to irradiate the object to be detected being greater than a fourth threshold intensity; and a preset delay time elapsing after the object to be detected is irradiated. The trigger instruction is generated when a determination criterion or timing indicating that the intensity of the scattered light and/or fluorescence and/or light emitted by a light source is greater than a predetermined threshold intensity is satisfied, to cause the charge integrator to start the integration, making it possible to record data of a current incoming signal waveform in time, thereby recording the entire current signal waveform.

In the device described in any of the above, the charge integrator is further configured to: stop integration of the electrical signal in response to the trigger instruction. The risk of saturation of the charge integrator and the analog-to-digital converter in the data acquisition module is further reduced by first stopping the integration in response to the trigger instruction and then releasing the accumulated charges.

In the device described in any of the above, the data acquisition module is configured to: continuously record the integrated electrical signal at a time interval less than 30% of the full width at half maximum of the waveform.

In the device described in any of the above, data acquired in integration windows separated by the trigger instruction is divided into data sets for further analysis. The time interval for continuous recording of the integrated electrical signal is set, so that it may be ensured that sufficient data points of the integrated electrical signal are recorded, thereby facilitating analysis based on a relatively complete signal waveform obtained.

In the device described in any of the above, the charge integrator is configured to: adjust a gain value of the charge integrator based on comparison of an intensity of the integrated electrical signal with a preset value, where the preset value is determined based on a predetermined proportion to a full scale of an analog-to-digital converter in the data acquisition module. The data acquired in the respective integration windows is divided, so that data of each incoming waveform may be analyzed and processed separately. A dynamic gain for an integration operation of the charge integrator is used, so that saturation of the analog-to-digital converter in a data acquisition module may be avoided, further increasing the dynamic range of the fluorescence detector.

The signal acquisition method and device according to the present disclosure increase the dynamic range of the fluorescence detector.

### Brief Description of the Drawings

FIG. 1 shows waveforms of photo-electron charge signal outputs in time domain that are detected by a fluorescence detector at different fluorescence intensities;
FIG. 2 is a block diagram showing a fluorescence detection system including a signal acquisition device according to an embodiment of the present disclosure;
FIG. 3 to FIG. 8 show exemplary signal waveforms at various stages of using the fluorescence detection system in FIG. 2 to perform photoelectric detection on fluorescence and acquire a detected electrical signal;
FIG. 9 shows a hardware implementation of a fluorescence detection system including a signal acquisition device according to an embodiment of the present disclosure;
FIG. 10 is a flowchart showing a signal acquisition method for fluorescence emitted by an object to be detected in a sample according to an embodiment of the present disclosure;
FIG. 11 is a block diagram showing a fluorescence detection system including a signal acquisition device according to a first implementation of the present disclosure;
FIG. 12 shows an exemplary integration trigger instruction signal for the fluorescence detection system shown in FIG. 11;
FIG. 13 is a block diagram showing a fluorescence detection system including a signal acquisition device according to a second implementation of the present disclosure;
FIG. 14 to FIG. 17 show exemplary signal waveforms at various stages of using the fluorescence detection system in FIG. 13 to perform photoelectric detection on fluorescence and acquire a detected electrical signal; and
FIG. 18 is a block diagram showing a fluorescence detection system including a signal acquisition device according to a third implementation of the present disclosure.

### Detailed Description of Embodiments

In the present application, the term "waveform" or "signal waveform" refers to a curve (i.e., a time domain variation curve) formed by a measured value, an observed value, or an estimated value of a relevant physical quantity changing over time. The term "full width at half maximum (FWHM)" refers to a distance between points that are before and after one peak of a signal waveform and each have a detected value, an observed value, or an estimated value equal to half of a maximum value of the peak, where the distance corresponds to time.

In the present application, the ordinal numerals "first", "second", etc. are used to denote different instances of the same element for distinguishing between elements, but do not indicate any sequential relationship between the elements.

According to an aspect of the present disclosure, a signal acquisition device is provided. The device may be used in a fluorescence detection system for biological sample analysis.

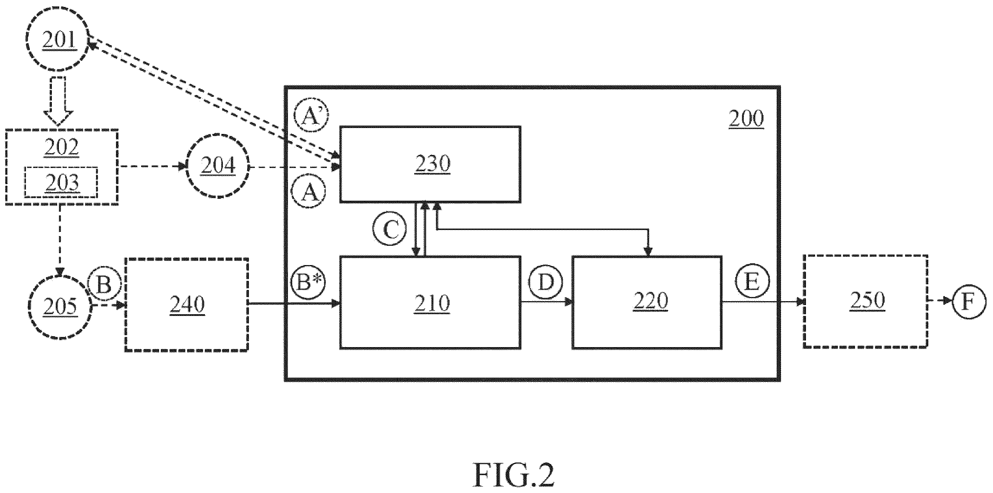

FIG. 2 is a block diagram showing a fluorescence detection system including a signal acquisition device 200 according to an embodiment of the present disclosure. As an example, the fluorescence detection system is applicable to a flow cytometer, high-intensity high-energy photon detection (e.g., a microplate reader, a high-content cell analyzer, etc.), or the like. In FIG. 2, components and interactions not necessary for the device 200 are shown by dashed line boxes and dashed line arrows.

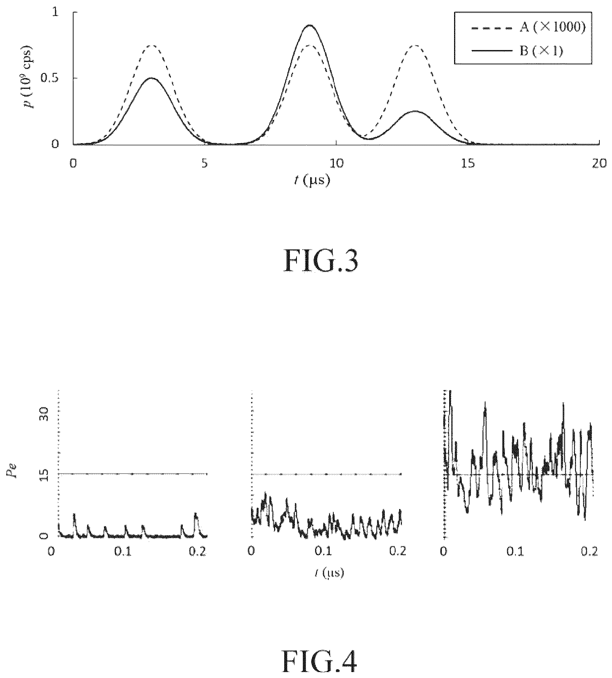

In FIG. 2, relevant signals are shown by circled letters. FIG. 3 to FIG. 8 show exemplary signal waveforms at various stages of the fluorescence detection system in FIG. 2 performing photoelectric detection on fluorescence and acquiring a detected electrical signal.

As shown in FIG. 2, a light source 201 may be used to irradiate an object 203 to be detected in a sample 202. As an example, the light source 201 may include a laser (e.g., for use in a flow cytometer or microplate reader) or a xenon lamp (e.g., for use in a microplate reader). The light source 201 may include a continuous wave laser (e.g., for use in a flow cytometer), a pulsed laser (e.g., for use in a microplate reader), or a pulsed xenon lamp (e.g., for use in a microplate reader). As an example, the sample 202 may include various biological samples, e.g., a blood sample, etc. The object 203 to be detected may include a biological cell, etc.

Irradiating the object 203 to be detected with the light source 201 generates scattered light 204 (e.g., forward scattered light or side scattered light). The object 203 to be detected is labeled with a fluorescent label, and therefore generates fluorescence 205 under the irradiation of the light source 201. In some embodiments (for example, an application scenario for a microplate reader), the object 203 to be detected may alternatively not be irradiated with the light source 201, but the object 203 to be detected labeled with a fluorescent label may generate spontaneous fluorescence 205. An example time domain waveform A of a light intensity of the scattered light 204 changing over time is shown by a dashed line in FIG. 3. In FIG. 3, the abscissa represents time (in microseconds), and the ordinate represents a photon intensity (count) (in counts per second (cps)).

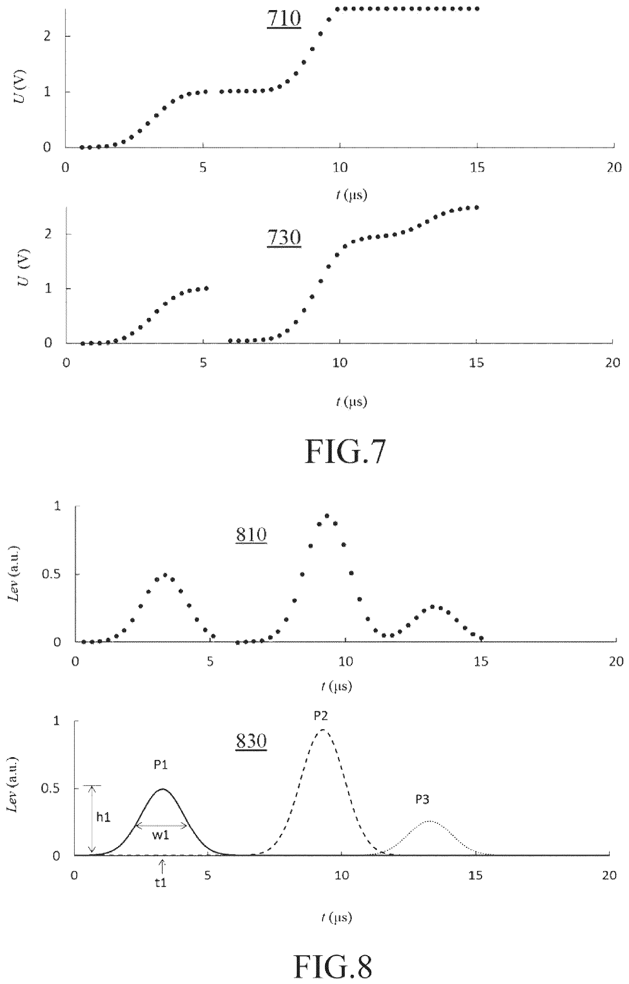

The fluorescence detector 240 may be configured to perform photoelectric detection on the fluorescence 205 emitted by the object 203 to be detected, to generate an electrical signal B*. The device 200 may integrate the electrical signal B* and acquire an integrated electrical signal, to generate an output signal E. A data analysis module 250 may further process the output signal E to generate a signal F for analyzing properties of the object 203 to be detected. An example time domain waveform B of a light intensity of the fluorescence 205 changing over time is shown by a solid line in FIG. 3. FIG. 4 shows the electrical signal B* generated by the fluorescence detector 240 by performing the fluorescence detection on the fluorescence 205. FIG. 7 shows an example output signal E output by a data acquisition module 220.

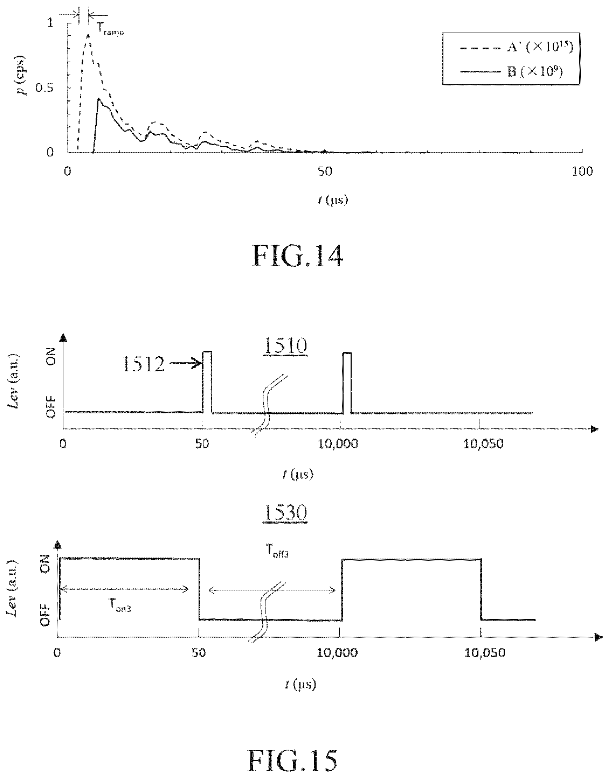

In contrast, in the application scenario for a microplate reader, the object 203 to be detected is irradiated with a periodic light source 201, to cause the object 203 to be detected to generate periodic fluorescence 205. In this scenario, no detection is performed on the scattered light, and a light intensity of the light source 201 is directly detected as needed. An example time domain waveform A' of the light intensity of the light source 201 changing over time is shown by a dashed line in FIG. 14. In FIG. 14, the abscissa represents time (in microseconds), and the ordinate represents a photon intensity (count) (in cps).

In some embodiments, the fluorescence detector 240 may include an SiPM array (also referred to as MPPC), which may include many (e.g., hundreds to thousands of) avalanche diode detectors. These avalanche diode detectors work in a Geiger counter mode and are connected in parallel as an output. In other embodiments, another form of photoelectric detection device may alternatively be used as the fluorescence detector 240.

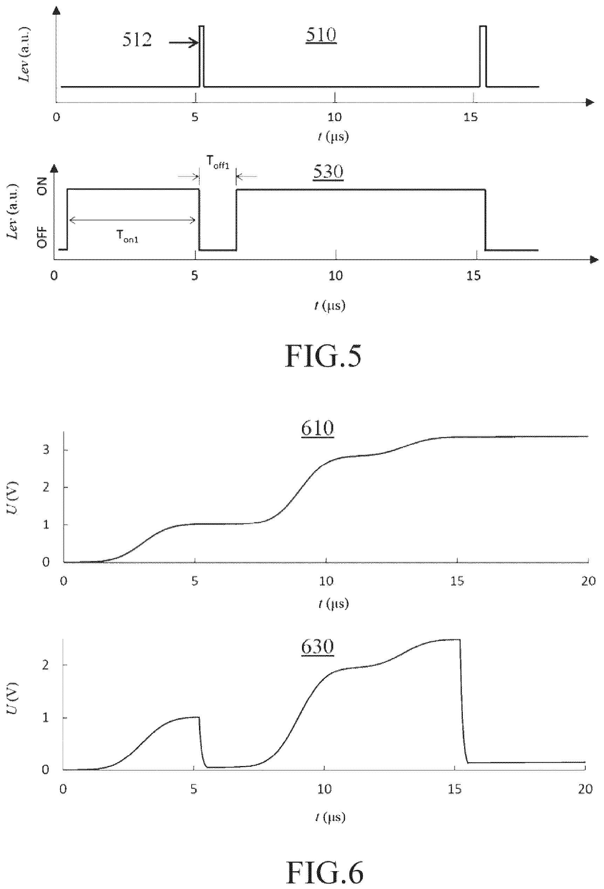

In some embodiments, the device 200 may include a charge integrator 210, the data acquisition module 220, and a trigger generator 230. The charge integrator 210 may integrate the electrical signal B* generated by the fluorescence detector 240, to generate the integrated electrical signal D. The data acquisition module 220 may acquire the integrated electrical signal D to output the signal E. FIG. 6 shows an example integrated electrical signal D output by the charge integrator 210.

The trigger generator 230 may generate an integration trigger instruction signal C, and provide the integration trigger instruction signal C to the charge integrator 210. FIG. 5 shows an example integration trigger instruction signal C generated by the trigger generator 230. In some embodiments, the integration trigger instruction signal C may be a trigger control signal 510 shown in FIG. 5, where the trigger control signal 510 may include a trigger instruction 512. In response to reception of the trigger instruction 512, the charge integrator 210 may be configured to release, in a time period, more than 90% of charges accumulated during integration, where the time period is less than 15% of the FWHM of the time domain waveform B reflecting the light intensity of the fluorescence. As an example, the trigger instruction 512 may be a pulse signal, a particular signal level, a signal edge, or the like.

The majority of the accumulated charges are released in a short time period, so that saturation of the charge integrator 210 in measuring a next signal waveform and saturation of an analog-to-digital converter in the data acquisition module 220 may be avoided, thereby effectively increasing a dynamic range of the fluorescence detector 240. For example, for a silicon photomultiplier with 5000 avalanche diode detector pixels and dark noise of 300 kilo-counts per second (keps), the silicon photomultiplier responds to a maximum of 5000 photons in 10 ns. This may correspond to a response to 300 × 5000 (1.5×10⁶) photons in the case of one to two photons of dark noise within 3 µs in a flow cytometer application scenario. This provides a dynamic range of about 10⁶ within 3 µs. For a fluorescence detection speed at the microsecond order of magnitude, the dynamic range that the fluorescence detector 240 can provide (i.e., a temporal resolution of the fluorescence detector 240) may be fully utilized by releasing the majority of the accumulated charges in a short time period, making it possible to effectively increase the dynamic range of the fluorescence detector 240 by 2 to 3 orders of magnitude, e.g., reaching a dynamic range of 10⁶.

Here, the release of more than 90% of the charges accumulated during the integration is set to allow a signal with a similar intensity to be recorded without exceeding a scale of the analog-to-digital converter in the data acquisition module 220. Further, generally, a margin of 20% is reserved for the scale of the analog-to-digital converter, and a signal intensity of a same cell varies within a range of 10%. A margin of 10% reserved for a next signal is obtained by subtracting 10% from 20%. In this way, an intensity of the next signal is 100% ± 10% (the margin reserved for the next signal) + 10% (charge retained during integration of the current signal) = 110% ± 10% (total charge), which is less than 100% (nominal) + 20% (a design margin) of the scale of the analog-to-digital converter.

FIG. 6 shows a waveform 610 of the integrated electrical signal D in the case of not releasing the charges accumulated during the integration and a waveform 630 of the integrated electrical signal D in the case of releasing the charges accumulated during the integration according to an embodiment of the present disclosure. FIG. 7 shows waveforms of the output signal E output by the data acquisition module 220 by acquiring the integrated electrical signal D, where a waveform 710 may correspond to the waveform 610 in FIG. 6 and a waveform 730 may correspond to the waveform 630 in FIG. 6. It can be seen from FIG. 6 and FIG. 7 that, the waveform 610 and the waveform 710 present saturation in the case of not releasing the charges accumulated during the integration, making it impossible to accurately measure a next incoming waveform. Enough charges accumulated during the integration are released, so that a sufficient margin may be reserved for integration and acquisition of the next signal.

Here, the time period for releasing the charge is set to be less than 15% of the FWHM of the time domain waveform B, so as to allow recording of two signals generated sequentially. Compared with a time interval (e.g., 30% of the FWHM of the time domain waveform B) at which the data acquisition module 220 continuously records the integrated electrical signal D, setting the time period to be less than 15% of the FWHM of the time domain waveform B allows a margin of 50% to be reserved. The margin is to be used to eliminate an artificial pulse signal, for example, by turning off a discharge switch (i.e., stopping discharge) (that is, the artificial pulse signal is neither integrated nor recorded).

In a further embodiment, the charge integrator 210 may be configured to release, in a time period, more than 90% of the charges accumulated during the integration, where the time period is less than 10% of the FWHM of the time domain waveform B reflecting the light intensity of the fluorescence.

Here, as shown in FIG. 2, the time domain waveform B is a time domain waveform of the light intensity of the fluorescence 205 emitted by the object 203 to be detected changing over time. Although the time domain waveform B has not been detected during data acquisition performed by the device 200, the time domain waveform B objectively exists based on physical laws.

Generating the fluorescence 205 when the time domain waveform B has not been detected does not affect generating, based on a time associated with the FWHM of the time domain waveform B, the trigger instruction for the release of the accumulated charges during the subsequent integration, because the FWHM of the waveform may be estimated according to a relevant physical law. As an example, the FWHM of the time domain waveform B may be estimated based on a condition of biological sample analysis. For example, for the flow cytometer application scenario, a continuous laser beam having a Gaussian intensity distribution and a thickness of about 15 µm may be used for irradiation, and the biological cell is passed through the laser beam at a flow rate of about 3 m/s to 5 m/s. In this way, it may be estimated accordingly that the biological cell passes through the laser beam in 3 µs to 5 µs. Since the fluorescence emitted by the biological cell has a maximum intensity when the center of the laser beam hits the center of the biological cell, the light intensity of the fluorescence in a Gaussian distribution may be estimated accordingly, where the FWHM of the time domain waveform B is about 4 µs. In this example, since the biological cell flowing through the laser beam is related to a change (which may be reflected by the time domain waveform B) in the intensity of the fluorescence 205, the FWHM of the time domain waveform B may be estimated based on conditions related to the laser beam and the flowing of the biological cell. As another example, the FWHM of the time domain waveform B may be determined based on intensity information of the scattered light 204 associated with the fluorescence 205. As described above, for the flow cytometer application scenario, when the center of the laser beam hits the center of the biological cell, the fluorescence 205 emitted by the biological cell has a maximum intensity, and at the same time, the scattered light 204 generated by the laser beam irradiating the biological cell also has a maximum intensity. That is, the intensity of the fluorescence 205 and the intensity of the scattered light 204 reach peaks and troughs of respective waveforms at substantially the same time (as shown in FIG. 3). Therefore, the FWHM of the time domain waveform B of the intensity of the fluorescence 205 may be estimated by calculating the FWHM of the time domain waveform A of the scattered light 204 (both are substantially the same). It is relatively easy to detect the intensity of the scattered light 204, which may be performed by a photon detector (e.g., included in the trigger generator 230 or another photon detector).

The FWHM of the time domain waveform B may alternatively be estimated based on a waveform of the signal F finally generated by the data analysis module 250. The signal F is generated by processing and analyzing the output signal E (which is an electrical signal) generated by the data acquisition module 220, and the waveform of the signal F is intended to reflect the time domain waveform B. Therefore, if it is determined that the waveform of the signal F is not distorted, the waveform of the signal F may be considered as reflecting the time domain waveform B of the light intensity of the fluorescence 205 (in this case, an error of the signal F relative to the time domain waveform B is generally within 10%). Thus, the FWHM of the time domain waveform B may be determined by calculating the FWHM of the waveform of the signal F, thereby determining a next trigger instruction based on the determined FWHM to trigger a next charge release. If it is determined that the waveform of the signal F is distorted, the waveform of the signal F cannot reflect the time domain waveform B of the light intensity of the fluorescence 205, in which case the fluorescence detection system needs to be adjusted to restore the waveform of the signal F. Whether the waveform of the signal F is distorted may be determined by comparing data points of the signal F with the distribution of the intensity of the laser beam (for example, fitting to a Gaussian curve of the intensity of the laser beam). FIG. 8 shows an example signal F output by the data analysis module 250. In FIG. 3, the abscissa represents time (in microseconds), and the ordinate represents a level value (in arbitrary units, a.u.), which may be a result of normalization processing after processing and analyzing voltage values (or alternatively, current values) shown in FIG. 7.

In some embodiments, the trigger generator 230 may include a photon detector, a signal comparator, and a threshold.

The trigger generator 230 may generate, in response to various trigger events or timing, a trigger instruction for releasing the charges accumulated during the integration. In some embodiments, the trigger generator 230 may detect the intensity of the scattered light 204 through the photon detector, and generate the trigger instruction based on the intensity of the scattered light 204 being less than a first threshold intensity. As an example, the first threshold intensity may be greater than three times a noise intensity of a detected signal of the scattered light 204 and less than 1/10 of a peak intensity of the signal. In some embodiments, the trigger generator 230 may receive the integrated electrical signal D from the charge integrator 210 or the output signal E from the data acquisition module 220, and generate the trigger instruction in response to a duration in which the intensity of the integrated electrical signal D or the output signal E is kept from being increased reaching a threshold time period. As an example, the threshold time period may be greater than a minimum sampling time of the data acquisition module 220, and less than 1/3 of the FWHM of the time domain waveform B (e.g., corresponding to the flow cytometer application scenario) or less than a ramp-up time (e.g., Tᵣₐₘₚ shown in FIG. 14) of the time domain waveform A of the light intensity of the light source 201 (e.g., for the microplate reader application scenario). In some embodiments, the trigger generator 230 may generate the trigger instruction in response to a duration of integrating the electrical signal B* reaching a preset time period. For example, in the microplate reader application scenario, the preset time period may be 50 µs, 100 µs, 500 µs, 1000 µs, etc. after the light intensity of the light source becomes greater than a threshold intensity. In some embodiments, the trigger generator 230 may acquire the integrated electrical signal D from the charge integrator 210 or the output signal E from the data acquisition module 220. The trigger generator 230 may generate the trigger instruction in response to the intensity of the acquired integrated electrical signal D or output signal E being greater than a threshold proportion to the full scale of the analog-to-digital converter in the data acquisition module 220. For example, in the microplate reader application scenario, the trigger generator 230 may generate the trigger instruction in response to the intensity of the acquired integrated electrical signal D or output signal E being greater than 80% of the full scale of the analog-to-digital converter in the data acquisition module 220. The trigger instruction is generated when a determination criterion or timing indicating that the light intensity of the scattered light 204 and/or fluorescence 205 is less than a predetermined threshold intensity or remains stable is satisfied, to release the charges accumulated during integration, making it possible to ensure that the accumulated charges are released in time while data of a current signal waveform is fully acquired, thereby reserving a sufficient margin for acquisition of a next signal.

In some embodiments, when receiving the trigger instruction (e.g., the trigger instruction 512 in the trigger control signal 510 in FIG. 5 or a falling edge in the trigger control signal 510) instructing the charge release, the charge integrator 210 may alternatively stop the integration and then release, in a time period, the charges accumulated during the integration as described above. The risk of saturation of the charge integrator 210 and the analog-to-digital converter in the data acquisition module 220 is further reduced by first stopping the integration in response to the trigger instruction and then releasing the accumulated charges.

In some embodiments, the integration trigger instruction signal C may be a trigger control signal 530 shown in FIG. 5. The trigger control signal 530 may include a falling edge (a first trigger instruction) and a rising edge (a second trigger instruction). In response to reception of the falling edge of the trigger control signal 530, the charge integrator 210 may release, in a time period, the charges accumulated during the integration as described above. In response to reception of the rising edge of the trigger control signal 530, the charge integrator 210 may start to integrate the electrical signal B*. That is, in this embodiment, a time when the charge integrator 210 starts integration is also controlled. The risk of saturation of the charge integrator 210 and the analog-to-digital converter in the data acquisition module 220 is further reduced by making a start of an integration process of the charge integrator 210 also controlled.

The trigger generator 230 may generate, in response to various trigger events or timing, a trigger instruction for causing the charge integrator 210 to start to integrate the electrical signal B*. In some embodiments, the trigger generator 230 may detect the intensity of the scattered light 204 through the photon detector, and generate the trigger instruction based on the intensity of the scattered light 204 being greater than a second threshold intensity. As an example, the second threshold intensity may be greater than three times a noise intensity of a detected signal of the scattered light and less than 1/10 of a peak intensity of the signal. In some embodiments, the trigger generator 230 may receive the integrated electrical signal D from the charge integrator 210 or the output signal E from the data acquisition module 220, and generate the trigger instruction in response to the intensity of the integrated electrical signal D or the output signal E being greater than a third threshold intensity. As an example, the third threshold intensity may be greater than three times a noise intensity of the integrated electrical signal and less than 10 × V/D, where V is a maximum output of the charge integrator, and D is a desired dynamic range. In some embodiments (e.g., for the microplate reader application scenario), the trigger generator 230 may detect the light intensity of the light source 201 through the photon detector, and generate the trigger instruction in response to the detected light intensity being greater than a fourth threshold intensity. In some embodiments, the trigger generator 230 may generate the trigger instruction in response to a preset delay time elapsing after the object 203 to be detected is irradiated with the light source 201. For example, in the microplate reader application scenario, the trigger generator 230 may trigger light emission from the light source 201 at a preset frequency, and generate the trigger instruction based on the preset delay time. The trigger instruction is generated when a determination criterion or timing indicating that the intensity of the scattered light 204 and/or fluorescence 205 and/or light emitted by the light source 201 is greater than a predetermined threshold intensity is satisfied, to cause the charge integrator 210 to start the integration, making it possible to record data of a current incoming signal waveform in time, thereby recording the entire current signal waveform.

The trigger instruction for causing the charge integrator 210 to start the integration that is generated in response to any of the above may be used in combination with the trigger instruction for releasing the charges accumulated during the integration that is generated in response to any of the above.

In some embodiments, the data acquisition module 220 may include the analog-to-digital converter and a data memory. The analog-to-digital converter may convert the integrated electrical signal D (analog signal) from the charge integrator 210 into a digital signal, and store digital signal data in the data memory for further analysis. As an example, the analog-to-digital converter may have an input scale of 0 V to 2.5 V, a 24-bit resolution, and a sample per second (SPS) of 600 kHz.

In some embodiments, the data acquisition module 220 may continuously record the integrated electrical signal D at a time interval less than 30% of the FWHM of the time domain waveform B. Here, the integrated electrical signal D is continuously recorded to obtain more information (such as a peak value (height) and a weight) of the signal waveform, rather than recording only an area (i.e., a final integral value) covered by a signal curve. The information may provide information about the objects to be detected (e.g., biological cells), such as a difference in shapes of the cells and a difference in surface types of the cells. The time interval for continuous recording is set to be less than 30% of the FWHM of the time domain waveform B, so as to record at least three points of one complete signal waveform (from a trough, followed by a peak, to another trough). This is a minimum requirement for performing further data analysis to obtain information such as the height, weight, area, integral, and differential of the waveform. As an example, in the flow cytometer application scenario, a typical value of the FWHM of the time domain waveform B may be 3 µs, and accordingly, the data acquisition module 220 may continuously record the integrated electrical signal D at a time interval of about 0.66 µs (about 20% of 3 µs). In a further embodiment, the data acquisition module 220 may continuously record the integrated electrical signal D at a time interval less than 20% of the FWHM of the time domain waveform B, so that at least five points of one complete signal waveform can be recorded.

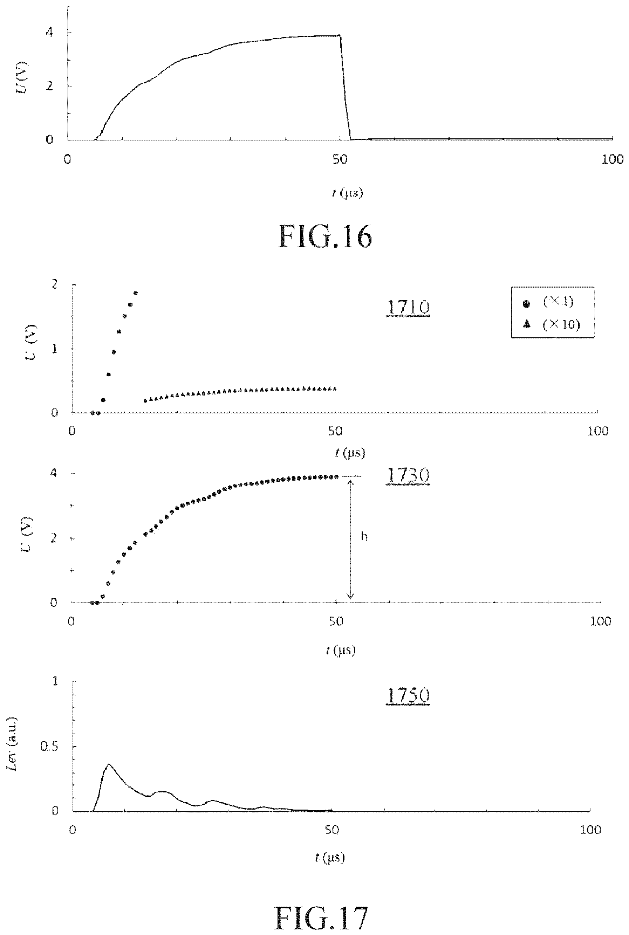

In some embodiments, the charge integrator 210 may include a dynamic gain value, and may integrate the electrical signal B* using the dynamic gain value. Specifically, the charge integrator 210 may adjust, based on comparison of the intensity of the integrated electrical signal D with a preset value, the gain value used to integrate the electrical signal B*, where the preset value may be determined based on a predetermined proportion to the full scale of the analog-to-digital converter in the data acquisition module 220. As an example, for the analog-to-digital converter having an input scale of 0 V to 2.5 V, a 24-bit resolution, and an SPS sampling rate of 600 kHz, when an intensity of the amplified signal to be acquired is greater than 80% of the full scale of the analog-to-digital converter (i.e., 2 V), the gain of the charge integrator 210 may be reduced by a factor of 10. When the intensity of the amplified signal to be acquired is less than 5% of the full scale of the analog-to-digital converter (i.e., 0.125 V), the gain of the charge integrator 210 may be increased by a factor of 10. One data point is lost during gain switching. Signal data generated by the integration may be recorded and stored by the data acquisition module 220 along with a corresponding gain value. The data stored in the data memory in the data acquisition module 220 may be presented with consideration to a corresponding gain value. This will be further discussed below with reference to FIG. 17. A dynamic gain for an integration operation of the charge integrator 210 is used, so that a risk of saturation of the analog-to-digital converter in the data acquisition module 220 may be reduced, further increasing the dynamic range of the fluorescence detector 240.

In some embodiments, data acquired in integration windows separated by the trigger instruction for releasing the charges accumulated during the integration may be divided into separate datasets, to facilitate separate analysis and processing of each data set. The data acquired in the respective integration windows is divided, so that data of each incoming waveform may be analyzed and processed separately.

In some embodiments, the data analysis module 250 may perform differential analysis and Gaussian peak fitting on the output signal E, to convert the output signal E into the signal F reflecting the time domain waveform B, as shown by a waveform 810 in FIG. 8. Subsequently, various peak information may be obtained based on the signal F, including a height (h1, h2, or h3), an FWHM (w1, w2, or w3), and a center (t1, t2, or t3), as shown by a waveform 830 in FIG. 8.

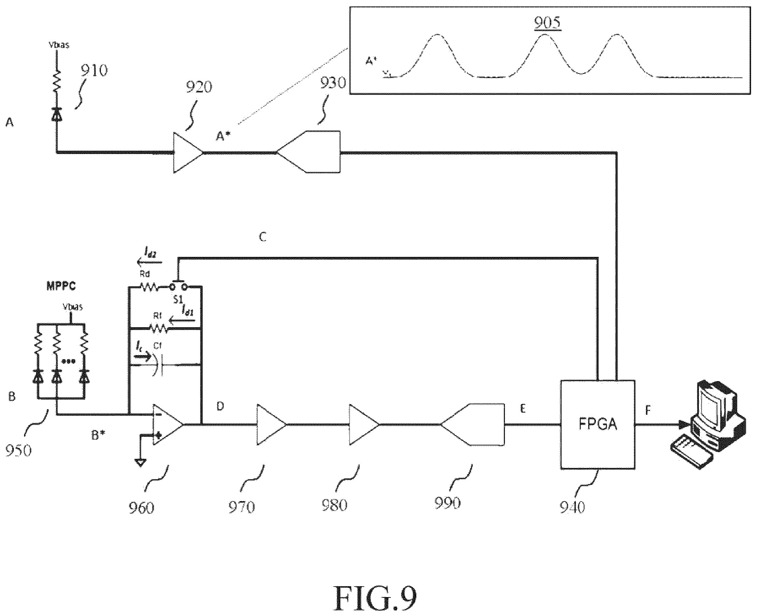

FIG. 9 shows a hardware implementation of a fluorescence detection system including a signal acquisition device according to an embodiment of the present disclosure.

The fluorescence detection system may include a photon detector 910 (e.g., a photodiode), an amplifier 920, an analog-to-digital converter 930, an FPGA 940, an MPPC array 950, a charge integrator 960, an amplifier 970, an amplifier 980, and an analog-to-digital converter 990.

In FIG. 9, signals generated throughout the fluorescence detection system are denoted by corresponding letters. A signal A* is as shown at 905, and other signals may correspond to signals denoted by the same letters as described above with reference to FIG. 2, and are similar to those shown in FIG. 3 to FIG. 8.

In the fluorescence detection system in FIG. 9, the photon detector 910, the amplifier 920, the analog-to-digital converter 930, and a part of the FPGA 940 may constitute the trigger generator 230 in FIG. 2. The photon detector 910 may detect the light intensity of the light emitted by the light source or the scattered light generated by the light source irradiating the object to be detected in the sample, to generate an electrical signal (e.g., the time domain waveform A). The amplifier 920 may amplify the electrical signal to generate an amplified electrical signal A*. The analog-to-digital converter 930 may perform analog-to-digital conversion on the amplified electrical signal to generate a digital signal output. At least part of the FPGA 940 may receive the digital signal output, and generate, based on various criteria and timing described above with reference to FIG. 2, the integration trigger instruction signal C including various trigger instructions.

The MPPC array 950 may constitute the fluorescence detector 240 in FIG. 2, which is configured to perform photoelectric detection on the fluorescence emitted by the object to be detected, to generate the electrical signal B*.

The charge integrator 960 may constitute the charge integrator 210 in FIG. 2, which is configured to integrate the electrical signal B* generated by the MPPC array 950, to generate the integrated electrical signal D. In some embodiments, the charge integrator 960 may include a typical integrator circuit, which may include an amplifier (e.g., an integrated operational amplifier) and a capacitor bridging a negative input terminal and an output terminal of the amplifier. To enable the charge integrator 960 to release, in response to the trigger instruction in the integration trigger instruction signal C, the charges accumulated during the integration, the charge integrator 960 may further include a resistor bridging the negative input terminal and the output terminal of the amplifier, and may include a switch. In response to reception of the trigger instruction, the switch of the charge integrator 960 may be turned on, so that the resistor and the capacitor form an RC discharge circuit. The switch of the charge integrator 960 may be turned off to stop the discharge process mentioned above.

The amplifier 970, the amplifier 980, the analog-to-digital converter 990, and a part of the FPGA 940 in the fluorescence detection system may constitute the data acquisition module 220 in FIG. 2. The amplifier 970 may filter and shape the integrated electrical signal D. The amplifier 980 may amplify the filtered and shaped electrical signal. The analog-to-digital converter 990 may perform analog-to-digital conversion on the amplified electrical signal to generate a digital signal. A part of the FPGA 940 may perform data acquisition.

A part of the FPGA 940 may constitute the data analysis module 250 in FIG. 2. The part may process and analyze the acquired signal data to generate the signal F, where the signal F may reflect properties of the object to be detected.

Although the single FPGA 940 is used in the fluorescence detection system shown in FIG. 9 to implement a plurality of modules of the device 200 in FIG. 2, in other embodiments, alternatively, separate FPGAs may be used for all the modules of the device 200 in FIG. 2. In other embodiments, one or more general purpose processors may alternatively be used to separately or collectively implement all the modules of the device 200 in FIG. 2.

The signal acquisition device according to this embodiment of the present disclosure can increase the dynamic range of the fluorescence detector for fast fluorescence detection (e.g., within 10 µs), and can use a low-cost analog-to-digital converter (for example, an analog-to-digital converter with an SPS of 3 MHz or two analog-to-digital converters with an SPS of 1.5 MHz may be used, eliminating the need for an expensive ultra-high speed (200 MHz SPS) analog-to-digital converter).

According to another aspect of the present disclosure, a signal acquisition method for fluorescence emitted by an object to be detected in a sample is provided.

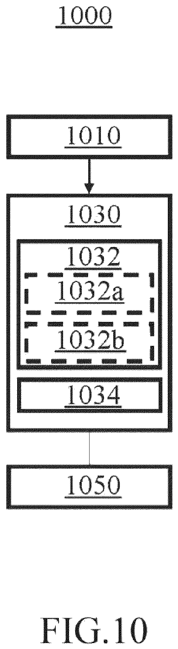

FIG. 10 is a flowchart showing a signal acquisition method 1000 for fluorescence emitted by an object to be detected in a sample according to an embodiment of the present disclosure. The method 1000 is applicable to fluorescence signal acquisition in a flow cytometer or high-intensity high-energy photon detection (e.g., a microplate reader, a high-content cell analyzer, etc.). In some embodiments, the method 1000 may be performed by elements in the system shown in FIG. 2.

The method 1000 may include step 1010: performing photoelectric detection on the fluorescence emitted by the object to be detected in the sample, to generate an electrical signal. The fluorescence is generated as described above with reference to FIG. 2, and the electrical signal may be, for example, the electrical signal B* shown above in FIG. 2. In some embodiments, step 1010 may be performed, for example, by the fluorescence detector 240 in FIG. 2.

The method 1000 may include step 1030: integrating the electrical signal, and acquiring an integrated electrical signal. The electrical signal may be, for example, the electrical signal B* shown above in FIG. 2. Step 1030 may include step 1032: integrating the electrical signal. In some embodiments, this step may be performed by the charge integrator 210 in FIG. 2. Step 1030 may further include step 1034: acquiring the integrated electrical signal. The integrated signal may be, for example, the integrated electrical signal D shown in FIG. 2. An acquired signal may be, for example, the output signal E in FIG. 2. In some embodiments, step 1034 may be performed by the data acquisition module 220 in FIG. 2.

In some embodiments, step 1032 may include an optional step 1032a: starting integration of the electrical signal in response to a trigger instruction. In some embodiments, step 1032a may be performed by the charge integrator 210 in FIG. 2. The risk of saturation of the charge integrator and the analog-to-digital converter in the data acquisition module is further reduced by making a start of an integration process of the charge integrator controlled. Since step 1032a is not mandatory, some embodiments may not include step 1032a.

In some embodiments, step 1032 may include an optional step 1032b: stopping integration of the electrical signal in response to (another) trigger instruction. In some embodiments, step 1032b may be performed by the charge integrator 210 in FIG. 2. In an embodiment including step 1032a, the trigger instruction in step 1032b is a trigger instruction other than the trigger instruction involved in step 1032a. In an embodiment that does not include step 1032a, only step 1032b involves a trigger instruction. The risk of saturation of the charge integrator and the analog-to-digital converter in the data acquisition module is further reduced by first stopping the integration in response to the trigger instruction and then (in step 1050 described below) releasing the accumulated charges. Since step 1032b is not mandatory, some embodiments may not include step 1032b. In some embodiments, step 1032b may be performed by the charge integrator 210 in FIG. 2.

The method 1000 may include step 1050: in response to the (another) trigger instruction, releasing, in a time period, more than 90% of charges accumulated during integration, where the time period is less than 15% of an FWHM of a time domain waveform reflecting a light intensity of the fluorescence. In an embodiment including step 1032a, the trigger instruction in step 1050 is a trigger instruction other than the trigger instruction involved in step 1032a. In an embodiment including step 1032b, the trigger instruction in step 1050 may be the trigger instruction in step 1032b. In an embodiment that does not include step 1032a or step 1032b, only step 1050 involves a trigger instruction. In some embodiments, step 1050 may be performed by the charge integrator 210 in FIG. 2. The majority of the accumulated charges are released in a short time period, so that saturation of the charge integrator in measuring a next signal waveform and saturation of the analog-to-digital converter in the data acquisition module may be avoided, thereby effectively increasing a dynamic range of the fluorescence detector. In a further embodiment, the time period may be set to be less than 10% of the FWHM of the time domain waveform reflecting the light intensity of the fluorescence. For a detection speed at the µs order of magnitude, the majority of the accumulated charges in a short time period are released, so that the dynamic range of the fluorescence detector may be effectively increased by 2 to 3 orders of magnitude, e.g., reaching a dynamic range of 10⁶.

The method 1000 may include an optional step: dividing data acquired in integration windows separated by the trigger instruction involved in step 1050 into data sets for further analysis. Since this step is not mandatory, some embodiments may not include this step. In some embodiments, this step may be performed by the data acquisition module 220 in FIG. 2. The data acquired in the respective integration windows is divided, so that data of each incoming waveform may be analyzed and processed separately.

In some embodiments, the trigger instructions involved in optional step 1032b and step 1050 are generated (e.g., generated by the trigger generator 230 in FIG. 2) in response to one of the following: a light intensity of scattered light generated by irradiating the object to be detected being less than a first threshold intensity; a duration in which an intensity of the integrated electrical signal is kept from being increased reaching a threshold time period; a duration of integrating the electrical signal reaching a preset time period; and the intensity of the integrated electrical signal being greater than a threshold proportion to a full scale of an analog-to-digital converter used in acquisition of the electrical signal. The selection of the first threshold intensity, the threshold time period, the preset time period, and the threshold proportion may be similar to the selection of parameters discussed in generating, by the trigger generator 230, the trigger instruction for releasing the charges accumulated during the integration described above with reference to FIG. 2. The trigger instruction is generated when a determination criterion or timing indicating that the light intensity of the scattered light and/or fluorescence is less than a predetermined threshold intensity or remains stable is satisfied, to release the charges accumulated during integration, making it possible to ensure that the accumulated charges are released in time while data of a current signal waveform is fully acquired, thereby reserving a sufficient margin for acquisition of a next signal.

In some embodiments, the trigger instruction involved in optional step 1032a is generated (e.g., generated by the trigger generator 230 in FIG. 2) in response to one of the following: a light intensity of scattered light generated by irradiating the object to be detected being greater than a second threshold intensity; an intensity of the integrated electrical signal being greater than a third threshold intensity; an intensity of light used to irradiate the object to be detected being greater than a fourth threshold intensity; and a preset delay time elapsing after the object to be detected is irradiated. The selection of the second threshold intensity, the third threshold intensity, the fourth threshold intensity, and the preset delay time may be similar to the selection of parameters discussed above in generating, by the trigger generator 230, the trigger instruction for starting the integration of the electrical signal described above with reference to FIG. 2. The trigger instruction is generated when a determination criterion or timing indicating that the intensity of the scattered light and/or fluorescence and/or light emitted by a light source is greater than a predetermined threshold intensity is satisfied, to cause the charge integrator to start the integration, making it possible to record data of a current incoming signal waveform in time, thereby recording the entire current signal waveform.

In some embodiments, step 1034 may include: continuously recording the integrated electrical signal at a time interval less than 30% of the FWHM of the time domain waveform reflecting the light intensity of the fluorescence. The time interval for continuous recording is set to be less than 30% of the FWHM of the waveform, so as to record at least three points of one complete signal waveform (from a trough, followed by a peak, to another trough). This is a minimum requirement for performing further data analysis to obtain information such as the height, weight, area, integral, and differential of the waveform. As an example, in the flow cytometer application scenario, a typical value of the FWHM of the waveform may be 3 µs, and accordingly, the data acquisition module 220 may continuously record the integrated electrical signal D at a time interval of about 0.66 µs (about 20% of 3 µs). In a further embodiment, step 1040 may include: continuously recording the integrated electrical signal at a time interval less than 20% of the FWHM of the waveform, so that at least five points of one complete signal waveform can be recorded.

In some embodiments, the method 1000 may further include an optional step: adjusting, based on comparison of the intensity of the integrated electrical signal with a preset value, a gain value of the charge integrator used to integrate the electrical signal, where the preset value is determined based on a predetermined proportion to the full scale of the analog-to-digital converter used in the acquisition of the electrical signal. As an example, for the analog-to-digital converter having an input scale of 0 V to 2.5 V, a 24-bit resolution, and an SPS sampling rate of 600 kHz, when an intensity of the amplified signal to be acquired is greater than 80% of the full scale of the analog-to-digital converter (i.e., 2 V), the gain of the charge integrator may be reduced by a factor of 10. When the intensity of the amplified signal to be acquired is less than 5% of the full scale of the analog-to-digital converter (i.e., 0.125 V), the gain of the charge integrator may be increased by a factor of 10. One data point is lost during gain switching. Signal data generated by the integration may be recorded and stored by the data acquisition module along with a corresponding gain value. The data stored in the data memory in the data acquisition module may be presented with consideration to a corresponding gain value. A dynamic gain for an integration operation of the charge integrator is used, so that saturation of the analog-to-digital converter in the data acquisition module may be avoided, further increasing the dynamic range of the fluorescence detector.

The signal acquisition method according to this embodiment of the present disclosure can increase the dynamic range of the fluorescence detector for fast fluorescence detection (e.g., within 10 µs), and can use a low-cost analog-to-digital converter (for example, an analog-to-digital converter with an SPS of 3 MHz or two analog-to-digital converters with an SPS of 1.5 MHz may be used, eliminating the need for an expensive ultra-high speed (200 MHz SPS) analog-to-digital converter).

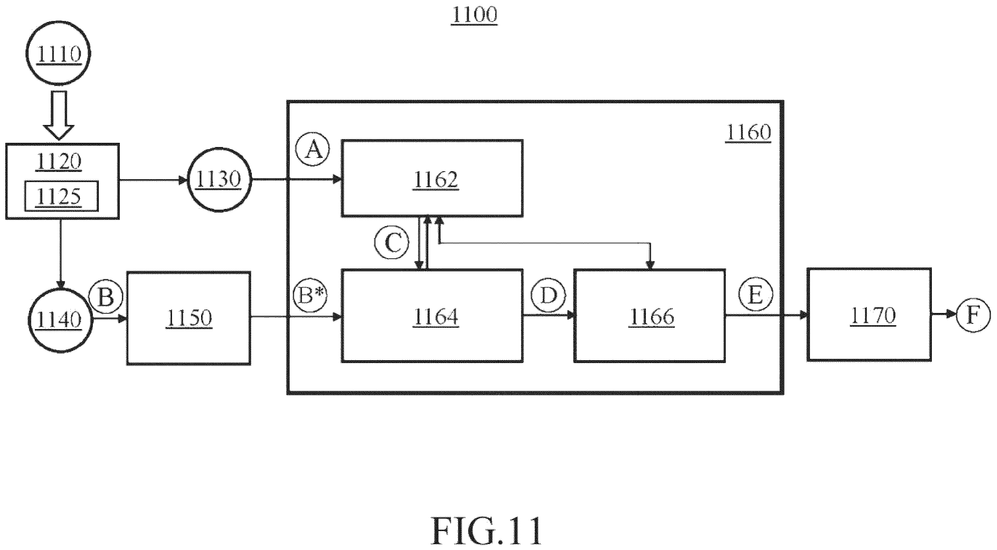

FIG. 11 is a block diagram showing a fluorescence detection system 1100 including a signal acquisition device according to a first implementation of the present disclosure. In FIG. 11, relevant signals are shown by circled letters.

The fluorescence detection system 1100 is applicable to a flow cytometer. In the flow cytometer, a biological cell 1125 (typically having a diameter of 0.1 to 10 µm) in a sample 1120 (e.g., a blood sample) is flowed through a cell pool, and the cell is passed through a continuous laser beam in 3 µs to 5 µs at a count rate of 35 kcps. As an example, the laser beam 1110 may have a thickness of about 15 µs and an intensity in a Gaussian distribution. The laser beam 1110 is perpendicular to a flow path. The laser beam 1110 may be emitted by a continuous wave laser.

A probability of two biological cells 1125 being simultaneously irradiated with the laser beam 1110 is much less than 10%. When the biological cell 1125 passes through the laser beam 1110, scattered light 1130 (forward scattered light and/or side scattered light) and cell-labeling fluorescence 1140 excited by the laser beam 1110 are generated. A time domain waveform A of a light intensity of the scattered light 1130 changing over time may be the time domain waveform A as shown in FIG. 3. A time domain waveform B of a light intensity of the fluorescence 1140 changing over time may be the time domain waveform B as shown in FIG. 3. Although the waveform has not been detected when the fluorescence 1140 is generated, the time domain waveform B objectively exists based on physical laws. When the center of the laser beam 1110 hits the center of the biological cell 1125, the intensity of the scattered light 1130 and the intensity of the fluorescence 1140 are both local maximums in the respective time domain waveform A and time domain waveform B. The time domain waveform A and the time domain waveform B as shown in FIG. 3 may indicate that three biological cells 1125 sequentially pass through the laser beam 1110. As an example, the time domain waveform A and the time domain waveform B may each have a Gaussian distribution profile, because a light intensity of the laser beam 1110 along the flow path may be in a Gaussian distribution. For the flow cytometer application scenario, the intensity of the scattered light 1130 is typically 3 or more orders of magnitude greater than the intensity of the fluorescence 1140. Therefore, the intensity of the scattered light may be better used as a parameter for generating the trigger instruction of controlling the integration process. Certainly, in some embodiments, the intensity of the fluorescence 1140 may alternatively be used to generate the trigger instruction used for controlling the integration process.

In some embodiments, the fluorescence detection system 1100 may include a silicon photomultiplier 1150, a device 1160, and a data analysis module 1170.

The silicon photomultiplier 1150 may also be referred to as MPPC according to its structure, and may include many (hundreds to thousands of) avalanche diode detectors that work in a Geiger counter mode and are connected in parallel as an output. The silicon photomultiplier 1150 responds to a single photon, with a quenching time of 10 ns. A dynamic range of the silicon photomultiplier 1150 is limited by the number of avalanche diode detectors and the quenching time. For example, for a silicon photomultiplier 1150 with 5000 avalanche diode detector pixels and dark noise of 300 kcps, the silicon photomultiplier responds to a maximum of 5000 photons in 10 ns. This may correspond to a response to 300 × 5000 (1.5×10⁶) photons in the case of one to two photons of dark noise within 3 µs in the flow cytometer application scenario. This provides a dynamic range of about 10⁶ within 3 µs.

The silicon photomultiplier 1150 may perform photoelectric detection on the fluorescence 1140, to generate an electrical signal B*. As an example, the electrical signal B* may be the electrical signal B* shown in FIG. 4. As described above with reference to FIG. 2, although the silicon photomultiplier 1150 can provide a dynamic range of about 10⁶ for fluorescence detection at the microsecond order of magnitude, due to a limitation of signal saturation in subsequent electrical signal integration and in analog-to-digital conversion during data acquisition, for fluorescence detection at the microsecond order of magnitude, only a dynamic range of about 10⁴ can be actually provided. The dynamic range renders the silicon photomultiplier in a photon counter mode (as shown by the leftmost electrical signal in FIG. 4) inoperative to a signal output in an analog mode (as shown by the rightmost electrical signal in FIG. 4), and similarly renders the silicon photomultiplier in an analog mode inoperative to a signal output in a photon counting mode.

In some embodiments, the device 1160 may be the device 200 in FIG. 2. The device 1160 may integrate the electrical signal B*, acquire an integrated electrical signal D, and generate an output signal E. As an example, the integrated electrical signal D may be the integrated electrical signal D shown in FIG. 6, and the output signal E may be the output signal E shown in FIG. 7.

The device 1160 may include a trigger generator 1162. In some embodiments, the trigger generator 1162 may be the trigger generator 230 in FIG. 2. The trigger generator 1162 may generate an integration trigger instruction signal C. The integration trigger instruction signal C may be used to control the integration of the electrical signal B*.

The device 1160 may include a charge integrator 1164. In some embodiments, the charge integrator 1164 may be the charge integrator 210 in FIG. 2. The charge integrator 1164 may receive the integration trigger instruction signal C from the trigger generator 1162, and perform controlled integration of the electrical signal B* based on the trigger instruction in the integration trigger instruction signal C.

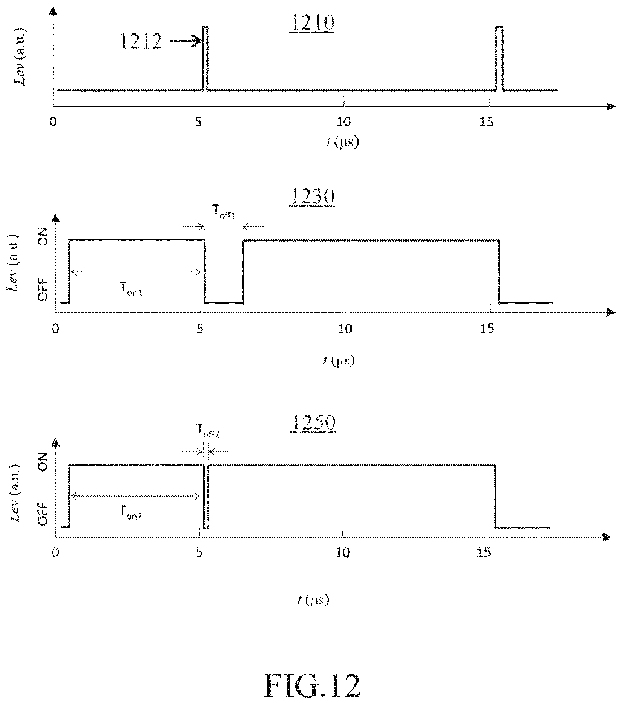

FIG. 12 shows an exemplary integration trigger instruction signal C for the fluorescence detection system shown in FIG. 11. In various embodiments, the integration trigger instruction signal C may include a trigger control signal 1210, a trigger control signal 1230, or a trigger control signal 1250.

In some embodiments, the trigger generator 1162 may generate the trigger control signal 1230 as shown in FIG. 12 based on the light intensity of the scattered light 1130. For example, the trigger generator 1162 may generate a trigger instruction ON in response to the light intensity of the scattered light 1130 being greater than a threshold intensity *TH1,* and generate a trigger instruction OFF in response to the light intensity of the scattered light 1130 being less than a threshold intensity *TH2.* In this embodiment, the trigger generator may include a silicon photon detector, a signal comparator, and two thresholds. As an example, the threshold intensities *TH1* and *TH2* each may be greater than three times a noise intensity of a detected signal of the scattered light 1130 and less than 1/10 of a peak intensity of the signal. Correspondingly, in response to reception of the trigger instruction ON, the charge integrator 1164 may start to integrate the electrical signal B*, and in response to reception of the trigger instruction OFF, stop integrating the electrical signal B* and release, in a time period T₁, more than 90% of the charges accumulated during the integration, where the time period T₁ is less than 15% of the FWHM of the time domain waveform B reflecting the light intensity of the fluorescence 1140. In a further embodiment, the time period T₁ may be set to be less than 10% of the FWHM of the time domain waveform B reflecting the light intensity of the fluorescence 1140. In a further embodiment, the charge integrator 1164 may release the charges in the time period T₁ until there is 1% of the originally accumulated charges left. In some embodiments, the charge integrator 1164 may include a charge releaser for releasing charges. An implementation of the charge releaser may be as discussed above for the charge integrator 960 in FIG. 9.

Alternatively, in some embodiments, the trigger generator 1162 may generate the trigger control signal 1210 as shown in FIG. 12 based on the light intensity of the scattered light 1130. Specifically, the trigger generator 1162 may generate a trigger instruction 1212 in response to the light intensity of the scattered light 1130 being less than the threshold intensity *TH2.* Correspondingly, in response to reception of the trigger instruction 1212, the charge integrator 1164 may release, in a time period T₁, more than 90% of the charges accumulated during the integration, where the time period T₁ is less than 15% of the FWHM of the time domain waveform B reflecting the light intensity of the fluorescence 1140. In a further embodiment, the time period may alternatively be set to be less than 10% of the FWHM of the time domain waveform B reflecting the light intensity of the fluorescence 1140.

In some embodiments, the trigger generator 1162 may generate the trigger control signal 1250 as shown in FIG. 12 based on the light intensity of the scattered light 1130. For example, the trigger generator 1162 may generate a trigger instruction ON in response to the light intensity of the scattered light 1130 being greater than a threshold intensity *TH3,* and generate a trigger instruction OFF in response to a duration in which the light intensity of the scattered light 1130 is kept from being increased reaching a time period T₂. As an example, the threshold intensity *TH3* is greater than three times the signal noise and less than 10 × V/D, where V is a maximum output of the charge integrator 1164, and D is a desired dynamic range. As an example, T₂ may be greater than a minimum sampling time of the data acquisition module 1166 and less than 1/3 of the FWHM of the time domain waveform B. Correspondingly, in response to reception of the trigger instruction ON, the charge integrator 1164 may start to integrate the electrical signal B*, and in response to reception of the trigger instruction OFF, stop integrating the electrical signal B* and release, in a time period T₁, more than 90% of the charges accumulated during the integration, where the time period T₁ is less than 15% of the FWHM of the time domain waveform B reflecting the light intensity of the fluorescence 1140. In a further embodiment, the time period T₁ may be set to be less than 10% of the FWHM of the time domain waveform B reflecting the light intensity of the fluorescence 1140. The time period T₁ may be less than the time period T₂. In a further embodiment, the charge integrator 1164 may release the charges in the time period T₁ until there is 1% of the originally accumulated charges left. In some embodiments, the charge integrator 1164 may include a charge releaser for releasing charges. An implementation of the charge releaser may be as discussed above for the charge integrator 960 in FIG. 9.

Alternatively, in some embodiments, the trigger generator 1162 may generate the trigger control signal 1210 as shown in FIG. 12 based on the light intensity of the scattered light 1130. Specifically, the trigger generator 1162 may generate a trigger instruction 1212 in response to a duration in which the light intensity of the scattered light 1130 is kept from being increased reaching the time period T₁. Correspondingly, in response to reception of the trigger instruction 1212, the charge integrator 1164 may release, in the time period, more than 90% of the charges accumulated during the integration, where the time period is less than 15% of the FWHM of the time domain waveform B reflecting the light intensity of the fluorescence 1140. In a further embodiment, the time period may alternatively be set to be less than 10% of the FWHM of the time domain waveform B reflecting the light intensity of the fluorescence 1140.

The device 1160 may include a dataset acquisition module 1166. In some embodiments, the data acquisition module 1166 may be the data acquisition module 220 in FIG. 2. The data acquisition module 1166 may acquire the integrated electrical signal D to generate an output signal E. In some embodiments, the data acquisition module 1166 may continuously record the integrated electrical signal D at a time interval less than 30% of the FWHM of the time domain waveform B. In a further embodiment, the data acquisition module 1166 may continuously record the integrated electrical signal D at a time interval less than 20% of the FWHM of the time domain waveform B.

In some embodiments, the data acquisition module 1166 may include the analog-to-digital converter and a data memory. The analog-to-digital converter may convert an analog signal (i.e., the integrated electrical signal D) from the charge integrator D into a digital signal, and store the digital signal in the data memory for further analysis. As an example, the analog-to-digital converter may have an input scale of 0 V to 2.5 V, a 24-bit resolution, and an SPS sampling rate of 3 MHz.

In some embodiments, the data acquisition module 1166 may alternatively acquire integrated data D under control of the integration trigger instruction signal C. For example, the data acquisition module 1166 may start to acquire the integrated data D in response to reception of the trigger instruction ON, and stop acquiring the integrated data D in response to reception of the trigger instruction OFF. In an alternative embodiment, the data acquisition module 1166 may continuously acquire the integrated data D at the time interval described above.

In some embodiments, the charge integrator 1164 may include two charge integrators and a charge releaser. In response to the charge integrator 1164 receiving the trigger instruction ON, a first charge integrator may start to integrate the electrical signal B*, and the data acquisition module 1166 may start to acquire data from the first charge integrator. In response to the charge integrator 1164 receiving the trigger instruction OFF, the first charge integrator stops integration and releases charges in a time period T₃ until there is 1% of the originally accumulated charges left, and the data acquisition module 1166 may stop data acquisition. In response to the charge integrator 1164 receiving the trigger instruction ON again, a second charge integrator may start to integrate charges, and the data acquisition module may start to acquire data from the second charge integrator. In response to the charge integrator 1164 receiving the trigger instruction OFF, the second charge integrator stops integration and releases charges in a time period T₃ until there is 1% of the originally accumulated charges left, and the data acquisition module 1166 may stop data acquisition. By parity of reasoning, the first charge integrator and the second charge integrator may alternately integrate the electrical signal B*. In some embodiments, the time period T₃ may be greater than the first time period T₁ described above, and less than twice the FWHM of the time domain waveform B. By alternately integrating the electrical signal using the two charge integrators, a requirement for a charge release time in each charge integrator may be loosened, because one charge integrator stops integration when the other charge integrator is performing integration, which provides an additional time for charge release in the other charge integrator.

In some embodiments, the data acquisition module 1166 may divide acquired data according to an integration window defined by each trigger instruction. As an example, for the trigger control signal 1210 in FIG. 12, each integration window may be defined by the trigger instruction 1212. For the trigger control signal 1230 or trigger control signal 1250, an integration window of a corresponding period may be defined by the trigger instruction ON and the trigger instruction OFF in the same trigger period. Accordingly, data acquired in an integration window 1 may be divided into a data set 1, data acquired in an integration window 2 may be divided into a data set 2, and so on. Each data set may be processed and analyzed independently, to describe original light signal information (i.e., the time domain waveform B).

In some embodiments, the charge integrator 1164 may include a charge integrator and a dynamic reference, and the data acquisition module 1166 may include a differential input. In response to reception of the trigger instruction ON, the charge integrator 1164 starts to integrate the electrical signal B*, and the data acquisition module 1166 starts to acquire the integrated electrical signal D. In response to reception of the trigger instruction OFF, the charge integrator 1164 stops integration, and the dynamic reference biases an output reference to a current output voltage in a time period T₄. The time period T₄ may be less than the time period T₂.

The data analysis module 1170 may process and analyze the output signal E generated by the data acquisition module 1166, to generate a signal F. As an example, the signal F may be the signal F shown in FIG. 8. As an example, the processing performed by the data acquisition module 1166 may include differential analysis and Gaussian peak fitting. As an example, the data analysis module 1170 may obtain various peak information based on the generated signal F, including a height (h1, h2, or h3), an FWHM (w1, w2, or w3), and a center (t1, t2, or t3), as shown by the waveform 830 in FIG. 8.

In some embodiments, portions of the fluorescence 1140 of different wavelengths may be detected by different channels in an array of silicon photomultipliers 1150. Accordingly, the charge integrator 1164, the data acquisition module 1166, and the data analysis module 1170 may include a corresponding number of channels to match each channel in the array of silicon photomultipliers 1150. In some embodiments, the trigger generator may include the single trigger generator 1162 to trigger all channels of the charge integrator 1164 and the data acquisition module 1166.

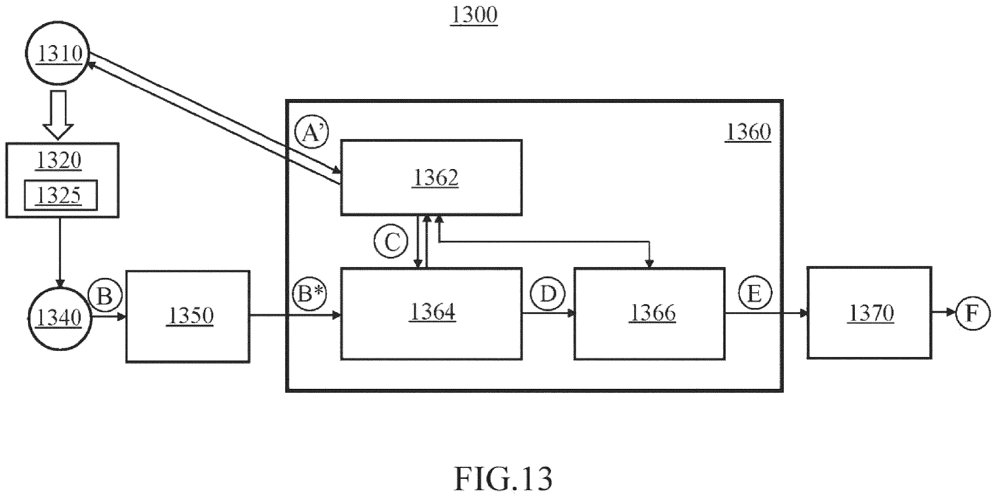

FIG. 13 is a block diagram showing a fluorescence detection system 1300 including a signal acquisition device according to a second implementation of the present disclosure. In FIG. 13, relevant signals are shown by circled letters. FIG. 14 to FIG. 17 show exemplary signal waveforms at various stages of using the fluorescence detection system 1300 in FIG. 13 to perform photoelectric detection on fluorescence and acquire a detected electrical signal.

The fluorescence detection system 1300 is applicable to a microplate reader or high-content cell analyzer. The fluorescence detection system 1300 is described below with reference to a microplate reader application scenario.

In the microplate reader application scenario, a light source 1310 having a high intensity and high energy photons irradiates an object 1325 to be detected (e.g., a biological cell) in a sample 1320 that is labeled with a fluorescent label. The object 1325 to be detected emits fluorescence 1340 under irradiation with the light source 1310. As an example, the light source 1310 may be a flickering xenon lamp or a pulsed laser. An example flickering xenon lamp may have a pulse width of about 20 µs and a repetition rate of 100 Hz. In FIG. 14, a time domain waveform A' of a light intensity of the light source 1310 changing over time is shown by a dashed line, and a time domain waveform B of a light intensity of the fluorescence 1340 changing over time is shown by a solid line. The microplate reader measures the object 1325 to be detected using the light source 1310 with periodic emission, and a measured signal corresponds to a result of irradiating the static object 1325 to be detected with light periodically emitted by the light source 1310.

In some embodiments, the fluorescence detection system 1300 may include a silicon photomultiplier 1350, a device 1360, and a data analysis module 1370.

The silicon photomultiplier 1350 may perform photoelectric detection on the fluorescence 1340, to generate an electrical signal B*. The device 1360 may integrate the electrical signal B* and acquire an integrated electrical signal, to generate an output signal E. The data analysis module may generate a signal F based on the output signal E for further analysis. The silicon photomultiplier 1350, the device 1360, and the data analysis module may respectively correspond to the fluorescence detector 240, the device 200, and the data analysis module 250 in FIG. 2.

The device 1360 may include a trigger generator 1362. In some embodiments, the trigger generator 1362 may be the trigger generator 230 in FIG. 2. The trigger generator 1362 may generate an integration trigger instruction signal C. The integration trigger instruction signal C may be used to control the integration of the electrical signal B*.

The device 1360 may include a charge integrator 1364. In some embodiments, the charge integrator 1364 may be the charge integrator 210 in FIG. 2. The charge integrator 1364 may receive the integration trigger instruction signal C from the trigger generator 1362, and perform controlled integration of the electrical signal B* based on the trigger instruction in the integration trigger instruction signal C.

FIG. 15 shows an exemplary integration trigger instruction signal C for the fluorescence detection system shown in FIG. 13. In various embodiments, the integration trigger instruction signal C may include a trigger control signal 1510 or a trigger control signal 1530.

In some embodiments, the trigger generator 1362 may generate the trigger control signal 1530 as shown in FIG. 15 based on the light intensity of the light source 1310. For example, the trigger generator 1362 may generate a trigger instruction ON in response to the light intensity of the scattered light 1130 being greater than a threshold intensity *TH1,* and generate a trigger instruction OFF after a preset time period Tₒₙ₃. As an example, the threshold intensity *TH1* may be greater than three times a noise intensity of a detected signal of the light source 1310 and less than 1/10 of a peak intensity of the signal. As an example, the preset time period Tₒₙ₃ may be 50 µs, 100 µs, 500 µs, 1000 µs, etc. Correspondingly, in response to reception of the trigger instruction ON, the charge integrator 1364 may start to integrate the electrical signal B*, and in response to reception of the trigger instruction OFF, stop integrating the electrical signal B* and release, in a time period T₁, more than 90% of the charges accumulated during the integration, where the time period T₁ is less than 15% of the FWHM of the time domain waveform B reflecting the light intensity of the fluorescence 1340. In a further embodiment, the time period T₁ may be set to be less than 10% of the FWHM of the time domain waveform B reflecting the light intensity of the fluorescence 1140. In a further embodiment, the charge integrator 1164 may release the charges in the time period T₁ until there is 1% of the originally accumulated charges left. In some embodiments, the charge integrator 1364 may include a charge releaser for releasing charges. An implementation of the charge releaser may be as discussed above for the charge integrator 960 in FIG. 9.

Alternatively, in some embodiments, the trigger generator 1362 may generate the trigger control signal 1510 as shown in FIG. 15 based on periodic timing of emitting light by the light source 1330. Specifically, the trigger generator 1362 may generate a trigger instruction 1512 in response to the preset time period Tₒₙ₃ elapsing after determining that the light source 1310 emits light. Correspondingly, in response to reception of the trigger instruction 1512, the charge integrator 1364 may release, in a time period T₁, more than 90% of the charges accumulated during the integration, where the time period T₁ is less than 15% of the FWHM of the time domain waveform B reflecting the light intensity of the fluorescence 1340. In a further embodiment, the time period may alternatively be set to be less than 10% of the FWHM of the time domain waveform B reflecting the light intensity of the fluorescence 1340.

In some embodiments, the trigger generator 1362 may generate the integration trigger instruction signal C based on an intensity of an integrated electrical signal D generated by the charge integrator 1364 or an intensity of an output signal E generated by a data acquisition module 1366. For example, the trigger generator 1362 may generate the trigger instruction ON in response to the intensity of the integrated electrical signal D or the intensity of the output signal E being greater than a threshold intensity *TH3,* and generate the trigger instruction OFF in response to a duration in which the intensity of the integrated electrical signal D or the output signal E is kept from being increased reaching a time period T₅. As an example, the threshold intensity *TH3* may be greater than three times a noise intensity of the integrated electrical signal D or the output signal E and less than 10 × V/D, where V is a maximum output of the charge integrator 1364, and D is a desired dynamic range. As an example, the time period T₅ may be greater than a minimum sampling time of the data acquisition module 1366, and less than a ramp-up time (e.g., Tᵣₐₘₚ in FIG. 14) of the time domain waveform A' of the light intensity of the light source 1310.

Alternatively, in some embodiments, the trigger generator 1362 may generate the trigger control signal 1510 as shown in FIG. 15 based on predetermined timing of the integrated electrical signal D or the output signal E. Specifically, the trigger generator 1362 may generate the trigger instruction 1512 in response to the preset time period T₅ elapsing after determining that the acquisition of the integrated electrical signal D starts. Correspondingly, in response to reception of the trigger instruction 1512, the charge integrator 1364 may release, in a time period T₁, more than 90% of the charges accumulated during the integration, where the time period T₁ is less than 15% of the FWHM of the time domain waveform B reflecting the light intensity of the fluorescence 1340. In a further embodiment, the time period may alternatively be set to be less than 10% of the FWHM of the time domain waveform B reflecting the light intensity of the fluorescence 1340.

In some embodiments, the trigger generator 1362 may generate, based on a preset delay time and predetermined timing, the integration trigger instruction signal C by actively triggering the light source 1310 to emit light. The trigger generator 1362 may trigger, at a preset frequency, the light source 1310 to emit light. Subsequently, the trigger instruction ON may be generated in response to the preset delay time elapsing after the light source 1310 is triggered, and the trigger instruction OFF may be generated in response to the duration in which the intensity of the integrated electrical signal D or the intensity of the output signal E is kept from being increased reaching Ts. As an example, the time period T₅ may be greater than a minimum sampling time of the data acquisition module 1366, and less than a ramp-up time (e.g., Tᵣₐₘₚ in FIG. 14) of the time domain waveform A' of the light intensity of the light source 1310.

Alternatively, in some embodiments, the trigger generator 1362 may generate the trigger control signal 1510 as shown in FIG. 15 based on periodic timing of emitting light by the light source 1330. Specifically, the trigger generator 1362 may generate the trigger instruction 1512 in response to the time period T₅ elapsing after determining that the light source 1310 emits light. Correspondingly, in response to reception of the trigger instruction 1512, the charge integrator 1364 may release, in a time period T₁, more than 90% of the charges accumulated during the integration, where the time period T₁ is less than 15% of the FWHM of the time domain waveform B reflecting the light intensity of the fluorescence 1340. In a further embodiment, the time period may alternatively be set to be less than 10% of the FWHM of the time domain waveform B reflecting the light intensity of the fluorescence 1340.

In some embodiments, the data acquisition module 1366 may include the analog-to-digital converter and a data memory. The analog-to-digital converter may convert an analog signal (i.e., the integrated electrical signal D) from the charge integrator D into a digital signal, and store the digital signal in the data memory for further analysis. As an example, the analog-to-digital converter may have an input scale of 0 V to 2.5 V, a 24-bit resolution, and an SPS sampling rate of 3 MHz.

In some embodiments, in response to the trigger instruction ON, the charge integrator 1364 may start or continue to integrate the electrical signal B*, and the data acquisition module 1366 may start to acquire the integrated electrical signal D. In response to the trigger instruction OFF, the charge integrator may stop integrating the electrical signal B*, and release, in a time period T₆, charges until there is 1% of the originally accumulated charges left, and the data acquisition module 1366 may stop acquiring the integrated electrical signal D. After the time period T₆, the charge integrator 1364 may start to integrate the electrical signal B*. In some embodiments, the time period T₆ may be less than the time period T₅. FIG. 16 shows a waveform of the integrated electrical signal D in the case of releasing the charges accumulated during the integration according to an embodiment of the present disclosure.

In some embodiments, the charge integrator 1364 may further include a dynamic gain value, and may integrate the electrical signal B* using the dynamic gain value. Specifically, the charge integrator 1364 may adjust, based on comparison of the intensity of the integrated electrical signal D with a preset value, the gain value used to integrate the electrical signal B*, where the preset value may be determined based on a predetermined proportion to the full scale of the analog-to-digital converter in the data acquisition module 1366. As an example, for the analog-to-digital converter having an input scale of 0 V to 2.5 V, a 24-bit resolution, and an SPS sampling rate of 600 kHz, when an intensity of the amplified signal to be acquired is greater than 80% of the full scale of the analog-to-digital converter (i.e., 2 V), the gain of the charge integrator 1364 may be reduced by a factor of 10. When the intensity of the amplified signal to be acquired is less than 5% of the full scale of the analog-to-digital converter (i.e., 0.125 V), the gain of the charge integrator 1364 may be increased by a factor of 10. One data point is lost during gain switching. Signal data generated by the integration may be recorded and stored by the data acquisition module 220 along with a corresponding gain value. The data stored in the data memory in the data acquisition module 1366 may be presented with consideration to a corresponding gain value. Referring to FIG. 17, a waveform 1710 shows acquired data values stored by the data acquisition module 1366 based on gain values, where a dot may correspond to a data point with a gain value × 1, and a triangle may correspond to a data point with a gain value × 0.1. A waveform 1730 shows data points stored with consideration to corresponding gain values. A waveform 1750 shows the signal F generated after processing and analysis by the data analysis module 1370. In the waveform 1750, the abscissa represents time (in microseconds), and the ordinate represents a level value (in a.u.), which may be a result of normalization processing after processing and analyzing voltage values (or alternatively, current values) shown in the waveform 1730.

In some embodiments, the data acquisition module 1366 may divide acquired data according to an integration window defined by each trigger instruction. As an example, for the trigger control signal 1510 in FIG. 15, each integration window may be defined by the trigger instruction 1512. For the trigger control signal 1530, an integration window of a corresponding period may be defined by the trigger instruction ON and the trigger instruction OFF in the same trigger period. Accordingly, data acquired in an integration window 1 may be divided into a data set 1, data acquired in an integration window 2 may be divided into a data set 2, and so on. Each data set may be processed and analyzed independently, to describe original light signal information (i.e., the time domain waveform B).

The data analysis module 1370 may process and analyze the output signal E generated by the data acquisition module 1366, to generate a signal F. As an example, the signal F may be the signal F shown in FIG. 17. As an example, the processing performed by the data acquisition module 1366 may include interpolation, differential analysis, and flat area detection. As an example, the data analysis module 1370 may obtain the height of a flat area (h in the waveform 1730 in FIG. 17) based on the generated signal F, i.e., a total fluorescence intensity.

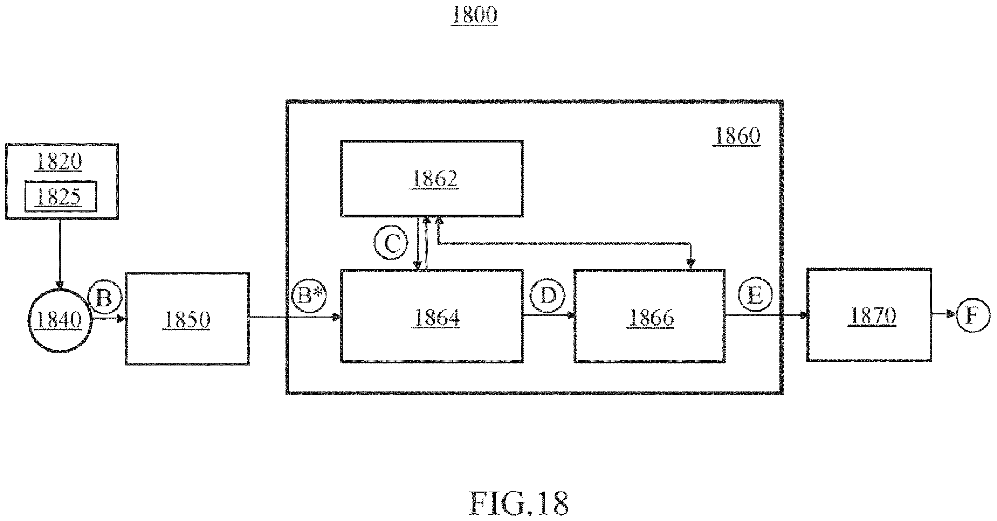

FIG. 18 is a block diagram showing a fluorescence detection system 1800 including a signal acquisition device according to a third implementation of the present disclosure.

Similar to the fluorescence detection system 1300 described above with reference to FIG. 13, the fluorescence detection system 1800 is also applicable to a microplate reader or high-content cell analyzer. A difference lies in that an object 1825 to be detected in a sample 1820 that is labeled with a fluorescent label may generate spontaneous fluorescence 1840 without an excitation light source. A duration of the spontaneous fluorescence 1840 may typically be a few minutes or longer. Accordingly, the fluorescence detection system 1800 does not include features related to the excitation light source and detection thereof.

In some embodiments, the fluorescence detection system 1800 may include a silicon photomultiplier 1850, a device 1860, and a data analysis module 1870, which may be similar to the silicon photomultiplier 1350, the device 1360, and the data analysis module 1370 in FIG. 13, respectively. The device 1860 may include a trigger generator 1862, a charge integrator 1864, and a data acquisition module 1866, which may be similar to the trigger generator 1362, the charge integrator 1364, and the data acquisition module 1366 in FIG. 13, respectively.

In some embodiments, the trigger generator 1862 may generate trigger instructions based on an external signal, a preset time period, a preset signal intensity threshold, and intensities of signals from the charge integrator 1864 and the data acquisition module 1866.

In some embodiments, the trigger generator may generate a trigger instruction ON in response to the external signal being triggered (e.g., when the sample 1820 is ready at a fluorescence acquisition position), and then generate a trigger instruction OFF after a preset time period. As an example, the preset time period may be 1 ms, 10 ms, 100 ms, 1 s, etc.

In some embodiments, the trigger generator 1862 may generate the trigger instruction OFF based on an intensity of an integrated electrical signal D or output signal E being greater than a given threshold proportion (e.g., 80%) to a full scale of an analog-to-digital converter in the data acquisition module 1866.

In some embodiments, in response to the trigger instruction ON, the charge integrator 1864 may start or continue to integrate an electrical signal B*, and the data acquisition module 1866 may start to acquire the integrated electrical signal D. In response to the trigger instruction OFF, the charge integrator 1864 may stop integrating the electrical signal B*, and release, in a time period T₇, charges until there is 1% of the originally accumulated charges left, and the data acquisition module 1866 may stop acquiring the integrated electrical signal D. After the time period T₇, the charge integrator 1364 may start to integrate the electrical signal B*. In some embodiments, the time period T₇ may be less than 1/10 of the preset time period.

Other aspects of the fluorescence detection system 1800 may be similar to those of the fluorescence detection system 1300 in FIG. 13.

Various embodiments of the present disclosure are described with reference to the drawings, and the various embodiments are illustrative rather than restrictive.

## Claims

1. A signal acquisition method for fluorescence emitted by an object to be detected in a sample, comprising:
performing photoelectric detection on the fluorescence emitted by the object to be detected in the sample, to generate an electrical signal;
integrating the electrical signal;
acquiring an integrated electrical signal; and
in response to a trigger instruction, releasing, in a time period, more than 90% of charges accumulated in a charge integrator configured to integrate the electrical signal, where the time period is less than 15% of a full width at half maximum of a time domain waveform reflecting a light intensity of the fluorescence.

2. The method of claim 1, wherein the trigger instruction is generated in response to one of the following:
a light intensity of scattered light generated by irradiating the object to be detected being less than a first threshold intensity;
a duration in which an intensity of the integrated electrical signal is kept from being increased reaching a threshold time period;
a duration of integrating the electrical signal reaching a preset time period; and
the intensity of the integrated electrical signal being greater than a threshold proportion to a full scale of an analog-to-digital converter used in acquisition of the electrical signal.

3. The method of claim 1, wherein the trigger instruction is a first trigger instruction, and integrating the electrical signal includes:
starting integration of the electrical signal in response to a second trigger instruction

4. The method of claim 3, wherein the second trigger instruction is generated in response to one of the following:
a light intensity of scattered light generated by irradiating the object to be detected being greater than a second threshold intensity;
an intensity of the integrated electrical signal being greater than a third threshold intensity;
an intensity of light used to irradiate the object to be detected being greater than a fourth threshold intensity; and
a preset delay time elapsing after the object to be detected is irradiated.

5. The method of claim 1, wherein integrating the electrical signal comprises:
stopping integration of the electrical signal in response to the trigger instruction.

6. The method of claim 1, wherein
acquiring the integrated electrical signal comprises:
continuously recording the integrated electrical signal at a time interval less than 30% of the full width at half maximum of the waveform.

7. The method of claim 1, further comprising:
dividing data acquired in integration windows separated by the trigger instruction into data sets for further analysis.

8. The method of claim 1, further comprising:
adjusting a gain value of the charge integrator based on comparison of an intensity of the integrated electrical signal with a preset value, where the preset value is determined based on a predetermined proportion to a full scale of an analog-to-digital converter used in acquisition of the electrical signal.

9. A signal acquisition device, comprising:
a trigger generator configured to generate and provide a trigger instruction;
a charge integrator configured to:
integrate an electrical signal, where the electrical signal is generated by performing photoelectric detection on fluorescence emitted by an object to be detected in a sample; and
in response to reception of the trigger instruction, release, in a time period, more than 90% of charges accumulated in the charge integrator, where the time period is less than 15% of a full width at half maximum of a time domain waveform reflecting a light intensity of the fluorescence; and
a data acquisition module configured to acquire an integrated electrical signal.

10. The device of claim 9, wherein the trigger generator is configured to generate the trigger instruction in response to one of the following:
a light intensity of scattered light generated by irradiating the object to be detected being less than a first threshold intensity;
a duration in which an intensity of the integrated electrical signal is kept from being increased reaching a threshold time period;
a duration of integrating the electrical signal reaching a preset time period; and
the intensity of the integrated electrical signal being greater than a threshold proportion to a full scale of an analog-to-digital converter in the data acquisition module.

11. The device of claim 9, wherein the trigger instruction is a first trigger instruction, and the charge integrator is further configured to:
start integration of the electrical signal in response to a second trigger instruction.

12. The device of claim 11, wherein the trigger generator is configured to generate the second trigger instruction in response to one of the following:
a light intensity of scattered light generated by irradiating the object to be detected being greater than a second threshold intensity;
an intensity of the integrated electrical signal being greater than a third threshold intensity;
an intensity of light used to irradiate the object to be detected being greater than a fourth threshold intensity; and
a preset delay time elapsing after the object to be detected is irradiated.

13. The device of claim 9, wherein the charge integrator is further configured to:
stop integration of the electrical signal in response to the trigger instruction.

14. The device of claim 9, wherein the data acquisition module is configured to:
continuously record the integrated electrical signal at a time interval less than 30% of the full width at half maximum of the waveform.

15. The device of claim 9, wherein data acquired in integration windows separated by the trigger instruction is divided into data sets for further analysis.

16. The device of claim 9, wherein the charge integrator is configured to: adjust a gain value of the charge integrator based on comparison of an intensity of the integrated electrical signal with a preset value, where the preset value is determined based on a predetermined proportion to a full scale of an analog-to-digital converter in the data acquisition module.
